(19) Europäisches Patentamt
European Patent Office
Office européen des brevets

(11) Publication number: **0 185 055 B1**

# (12) EUROPEAN PATENT SPECIFICATION published in accordance with Art. 158(3) EPC

(45) Date of publication of patent specification: **24.04.91**

(51) Int. Cl.5: **C08J 7/00**, C08J 9/00

(21) Application number: **85902861.5**

(22) Date of filing: **20.05.85**

(86) International application number: **PCT/US85/00956**

(87) International publication number: **WO 85/05318 (05.12.85 85/26)**

## (54) Method of making a microporous article.

(30) Priority: **18.05.84 US 611666**
**18.05.84 US 611670**

(43) Date of publication of application: **25.06.86 Bulletin 86/26**

(45) Publication of the grant of the patent: **24.04.91 Bulletin 91/17**

(84) Designated Contracting States: **AT BE CH DE FR GB LI LU NL SE**

(56) References cited:
**EP-A- 0 091 669**
**US-A- 3 375 208**
**US-A- 3 833 708**
**US-A- 3 847 867**
**US-A- 4 100 238**
**US-A- 4 293 670**
**FR-A- 2 091 382**
**US-A- 3 819 782**
**US-A- 3 838 097**
**US-A- 3 869 310**
**US-A- 4 107 147**

**Polymer Handbook, second edition, J. Brandrup and E.H. Immergut, Editors. New York, John Wiley & Sons, c1975 pages III-212, III-213**

(73) Proprietor: **Scimat Limited**
**Techno Trading Estate Bramble Road**
**Swindon SN2 6EZ(GB)**

(72) Inventor: **DUBROW, Robert, Stanley**
**334 Roble Avenue**
**Redwood City, CA 94061(US)**
Inventor: **FROIX, Michael, Francis**
**1355 Miravalle Avenue**
**Los Altos, CA 94022(US)**

(74) Representative: **Belcher, Simon James et al**
**Urquhart-Dykes & Lord Tower House Merrion Way**
**Leeds LS2 8PA(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of making a microporous polymeric article. In particular it relates to a method of making a microporous polymeric article from a blend comprising at least two polymers which are molecularly compatible, which involves treating the article with a solvent.

It is well known that most polymers are generally incompatible with each other. Most blends of two or more polymers contain the separate polymers as individual component domains or phases. Thus blends of what are termed compatible polymers generally are mechanically compatible only and exhibit properties which vary widely over the concentration range of the polymers. Such blends comprise a matrix polymer containing the other polymer as a dispersed or co-continuous phase. Such dispersed phases can be microscopic in size sometimes giving the resulting blend of multiple phases the appearance of being a single phase. There are, however, a few pairs of polymers which are molecularly compatible, that is they form a molecularly dispersed mixture comprising a single amorphous phase when they are blended together. Not only do such blends not separate into their individual amorphous components, but they are also characterized by having a single glass transition temperature ($T_g$). Mechanically compatible blends, on the other hand, exhibit two or more $T_g$'s characteristic of the $T_g$'s of the individual components. By the term glass transition temperature is meant the temperature at which an amorphous polymer or the amorphous regions of a partially crystalline polymer changes to or from a hard and relatively brittle state to a more flexible or rubbery condition. Measurement of glass transition temperatures of polymer systems is described, for example, in Thermal Characterization Techniques, Slade, et al., Marcel Dekker, Inc., New York (1970).

As mentioned above, very few polymeric blends are known wherein two or more polymers exhibit molecular compatibility. Reported in the literature are three basic classifications of compatible polymers represented by the following polymer pairs: poly(vinylidenefluoride) and poly(methyl methacrylate), poly(vinyl chloride) and poly(caprolactone), and poly(styrene) and poly(phenyleneoxide). For examples of these type of compatible blends see Polymer Handbook, 2nd edition, Brandrup, et al. page III 211-213.

Blends of polyetherimides and poly(aryl ethers) are described in U.S. Patent No. 4,293,670 to Robeson et al. The only specific blends reported in the patent are blends of a poly(aryl ether sulfone) and a poly(etherimide). Such blends exhibit mechanical compatibility with each blend having more than one glass transition temperature. Blends of a poly(etherimide) and a poly(aryl ether ketone) are discussed in general terms and no specific blend of a poly(aryl ether ketone) and a polyetherimide is reported. There is no mention that blends of these components would be molecularly compatible and therefore different from the poly(aryl ether sulfone)/polyetherimide blends specifically described.

Microporous articles prepared by blending one polymer with a pore forming additive which is then leached out, generally have pore sizes considerably larger than the pore sizes of the articles of this invention. When a polymer is utilized as the pore forming component to be leached from the polymer system, it had been thought that the polymers used should be at least partially incompatible. This is taught, for example, in U.S. Patent No. 3,544,489 to Dowbenko, et al. In the Dowbenko et al. patent, a composition comprising a thermosetting resin and a solvent extractable thermoplastic resin are applied to a substrate, the thermosetting resin is cured resulting in the formation of minute discrete particles of the thermoplastic resin in the thermoset resin matrix. The thermoplastic is then extracted using a suitable solvent. It is specifically stated by Dowbenko, et al that the polymers must be at least partially incompatible.

In U.S. Patent No. 3,375,208, Duddy teaches the formation of microporous materials by treating a thermoplastic resin composition with a solvent which comprises intimately mixing under heat and pressure a particulate thermoplastic resin which is insoluble in said solvent with a substantially incompatible particulate thermoplastic resin which is soluble in said solvent to soften the resin into a plasticized mass, shaping the mass and thereafter contacting the shaped mass with said solvent to remove substantially all of the soluble thermoplastic resin and thereby render the insoluble thermoplastic resin microporous. It is specifically stated in U.S. Patent No. 3,375,208 that it is the incompatibility of the resins and the intimate milling and blending thereof which results in a porous material having thread-like pores of capillary size.

In U.S. Patent No. 4,096,099 to Koyama, et al., a porous film having fine cylindrical holes from 70 to 2000 A in diameter is disclosed. The resin film is prepared by treating a film of an AB or ABA type copolymer to decompose the copolymer to remove one of the components. It is clear that the polymer components used to make the block copolymers are incompatible with each other. Thus, the patentees resort to the use of block copolymers to obtain a microporous article in the desired film followed by decomposition of the block copolymer.

EP-A-91669 discloses a process for producing a porous film-like or fibrous structure of an aromatic polyester, which comprises melt-molding a blend of the polyester and a low molecular weight compound,

and extracting at least a major part of the low molecular weight compound.

It has now been discovered that useful articles can be prepared from a blend of at least two molecularly compatible polymers by treating the blend with a solvent which is a solvent for one of the polymers and a non-solvent for the other. The resulting article is microporous, if the solvent is removed while restraining the article from shrinking. If the article is not restrained from shrinking, the force of shrinkage (recovery force) can be utilized to apply the article to a substrate. Depending on the degree of shrinkage permitted, the article may or may not be microporous.

In one aspect, the invention provides a method of making a microporous article, which comprises:

(a) forming a blend of two molecularly compatible polymers, the blend existing as a single amorphous phase;

(b) forming the blend into an article of desired configuration; and

(c) extracting at least some of one of the polymers by treatment with a solvent in which one of the polymers is soluble, while controlling shrinkage of the article.

The polymer systems utilized in accordance with this invention are blends comprising two or more polymers which are molecularly compatible with each other. Relatively few blends of this type are known and as the science of polymer blends develops others may be discovered that are also within the scope of this invention. The process of making an article of this application is applicable to any blend of two or more molecularly compatible polymers. Current known molecularly compatible classes of polymers comprise the following representative pairs:

1) poly(vinylidene fluorides) and poly(methyl methacrylates) and other poly(ester methacrylates);
2) poly(vinyl chlorides) and poly(caprolactones);
3) poly(styrenes) and poly(phenylenes) oxide; and
4) polyetherimide and poly(aryl ether ketones)

and the molecularly compatible co-polymers of the above polymers. The use, in this application, of the generic term for a polymer, e.g. polyvinylidene fluoride, covers homopolymers and copolymers of the specified polymer.

Of particular interest are microporous articles formed from a blend of a poly(aryl ether ketone) and a poly(etherimide).

The term poly(aryl ether ketone) refers to polymers having the repeat unit of the formula

-CO-Ar-CO-Ar'-

wherein Ar and Ar' are aromatic moieties at least one of which containing a diaryl ether linkage forming part of the polymer backbone and wherein both Ar and Ar' are covalently linked to the carbonyl groups through aromatic carbon atoms.

Preferably, Ar and Ar' are independently selected from substituted and unsubstituted phenylene and substituted and unsubstituted polynuclear aromatic moieties. The term polynuclear aromatic moieties is used to mean aromatic moieties containing at least two aromatic rings. The rings can be fused, joined by a direct bond or by a linking group. Such linking groups include for example, carbonyl, ether sulfone, sulfide, amide, imide, azo, alkylene, and perfluoroalkylene and the like. As mentioned above, at least one of Ar and Ar' contains a diaryl ether linkage.

The phenylene and polynuclear aromatic moieties can contain substituents on the aromatic rings. These substituents should not inhibit or otherwise interfere with the polymerization reaction to any significant extent. Such substituents include, for example, phenyl, halogen, nitro, cyano, alkyl, and 2-alkynyl.

Poly(aryl ether ketones) having the following repeat units (the simplest repeat unit being designated for a given polymer) are preferred:

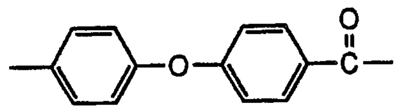

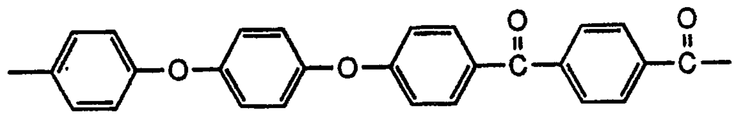

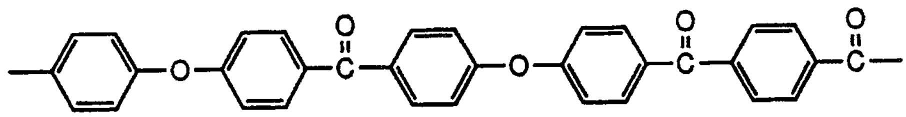

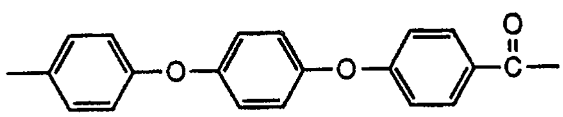

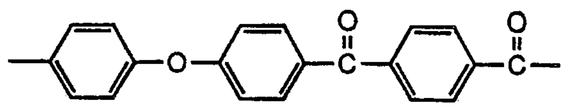

Poly(aryl ether ketones) can be prepared by known methods of synthesis. Preferred poly(aryl ether ketones) can be prepared by Friedel-Crafts polymerization of a monomer system comprising:

I)

(i) phosgene or an aromatic diacid dihalide together with

(ii) a polynuclear aromatic comonomer comprising:

(a) H-Ar"-O-Ar"-H

(b) H-(Ar -O)$_n$-Ar"-H wherein n is 2 or 3

(c) H-Ar"-O-Ar"-(CO-Ar"-O-Ar")$_m$-H wherein m is 1, 2 or 3

or

(d) H-(Ar"-O)$_n$-Ar"-CO-Ar"-(O-Ar")$_m$-H wherein m is 1, 2 or 3, and n is 2 or 3 or

II) an acid halide of the formula:

H-Ar"-O-[(Ar"-CO)$_p$-(Ar"-O)$_q$-(Ar"-CO)$_r$]$_k$-Ar"-CO-Z wherein Z is halogen, k is 0, 1 or 2, p is 1 or 2, q is 0, 1 or 2 and r is 0, 1 or 2;

or

III) an acid halide of the formula:

H-(Ar"-O)$_n$-Ar"-Y wherein n is 2 or 3 and Y is CO-Z or CO-Ar"-CO-Z where Z is halogen;

wherein each Ar" is independently selected from substituted or unsubstituted phenylene, and substituted and unsubstituted polynuclear aromatic moieties free of ketone carbonyl or ether oxygen groups, in the presence of a reaction medium comprising:

A) A Lewis acid in an amount of one equivalent per equivalent of carbonyl groups present, plus one equivalent per equivalent of Lewis base, plus an amount effective to act as a catalyst for the polymerization;

B) a Lewis base in an amount from 0 to about 4 equivalents per equivalent of acid halide groups present in the monomer system;

and

C) a non-protic diluent in an amount from 0 to about 93% by weight, based on the weight of the total reaction mixture.

The aromatic diacid dihalide employed is preferably a dichloride or dibromide. Illustrative diacid dihalides which can be used include, for example

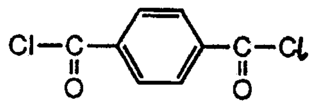

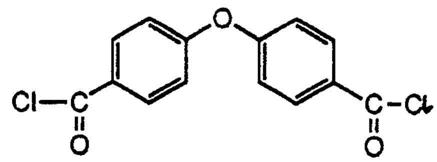

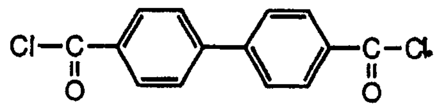

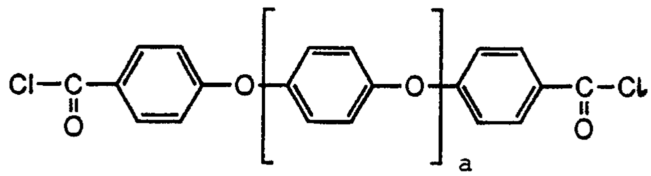

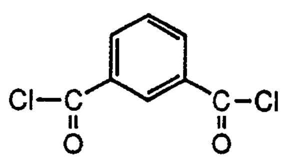

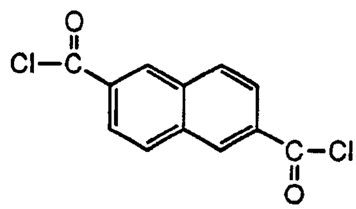

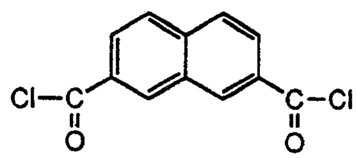

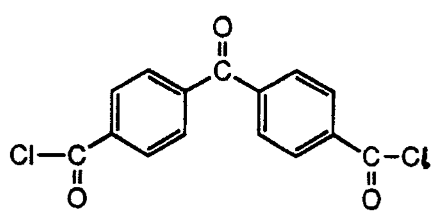

wherein a is 0-4.

Illustrated polynuclear aromatic comonomers which can be used with such diacid halides are:

(a) H-Ar"-O-Ar"-H , which includes, for example:

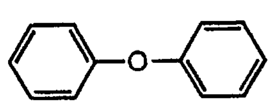

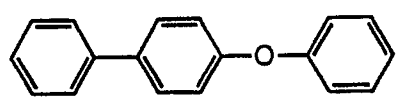

(b) H-(Ar"-O)$_n$-Ar"-H , which include, for example:

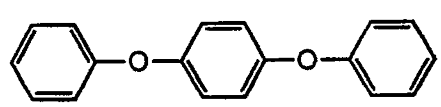

and

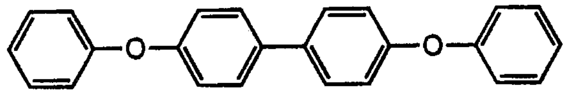

(c) H-Ar"-O-Ar"-(CO-Ar"-O-Ar")$_{m}$-H , which includes, for example:

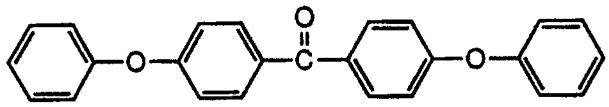

and

(d) H-(Ar"-O)$_{n}$-Ar"-CO-Ar"-(O-Ar")$_{m}$-H which includes, for example:

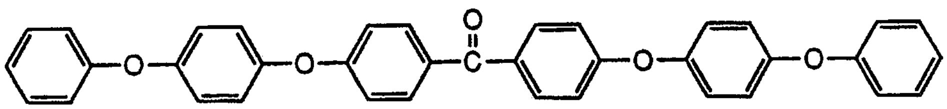

Monomer systems II and III comprise an acid halide. (The term acid halide is used herein to refer to a monoacid monohalide.) In monomer system II, the acid halide is of the formula:

H-Ar"-O-[(Ar"-CO)$_{p}$-(Ar"-O)$_{q}$-(Ar"-CO)$_{r}$]$_{k}$-Ar"-CO-Z

Such monomers include for example, where k = 0

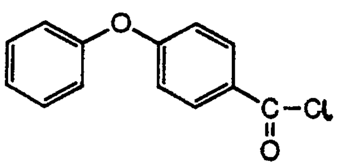

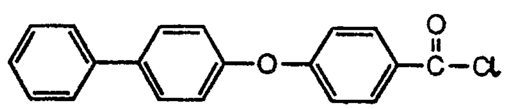

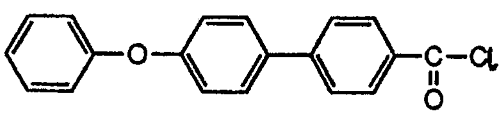

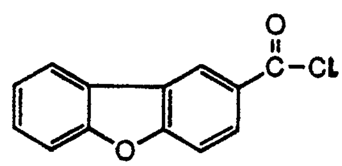

and where k = 1

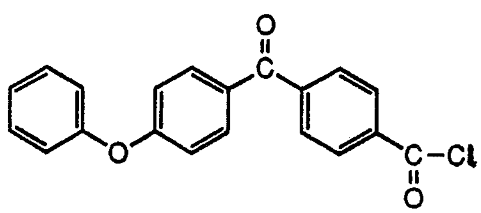

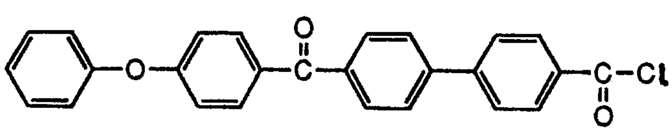

In monomer system III, the acid halide is of the formula

H-(Ar"-O)$_n$-Ar"-Y

Examples of such acid halides include

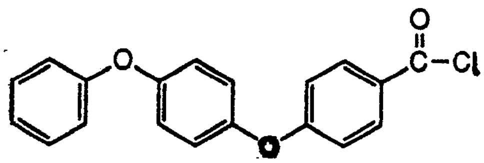

and

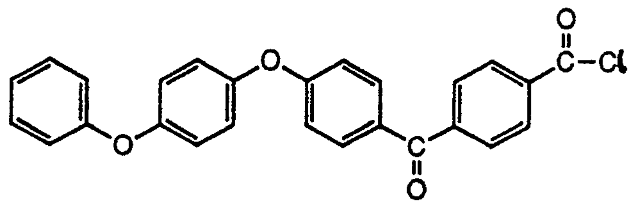

It is to be understood that combinations of monomers can be employed. For example, one or more diacid dihalides can be used with one or more polynuclear aromatic comonomers as long as the correct stoichiometry is maintained. Further, one or more acid halides can be included. In addition monomers which contain other linkages such as those specified above, can be employed as long a one or more of the comonomers used contains at least one ether oxygen linkage. Such comonomers include for example:

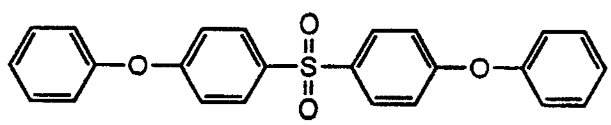

and

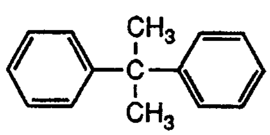

which can be used as the sole comonomer with an ether containing diacid dihalide or with phosgene or any diacid dihalide when used in addition to a polynuclear aromatic comonomer as defined in I(ii)(a), I(ii)(b), I(ii)-(C) or I(ii)(d). Similarly

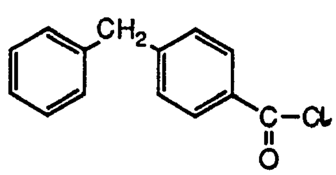

can be used as a comonomer together with an ether-containing polynuclear aromatic acid halide or as an additional comonomer together with a monomer system as defined in I.

The monomer system can also contain up to about 30 mole % of a comonomer such as a sulfonyl chloride which polymerizes under Friedel-Crafts conditions to provide ketone/sulfone copolymers.

The polyetherimides suitable for use in this invention are well known in the art and described in, for example, U.S. Patent Nos. 3,847,867, 3,838,097 and 4,107,147. A preferred polyetherimide has the structure:

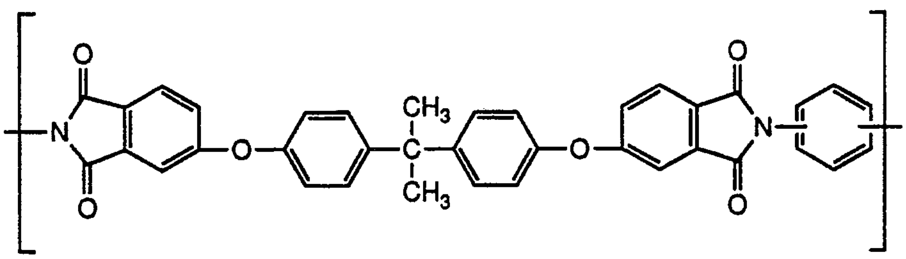

For example, one or more polyetherimides and one or more poly (aryl ether ketones) can be present in the blend to provide the desired physical properties of the final article. The polymers or co-polymers can be used in any of the various commercial grades which may vary in average molecular weights, molecular weight distributions and may contain minor amounts of comonomer residues.

Blends of molecularly compatible polymers are characterized in that they comprise a single amorphous phase although individual polymers may have both an amorphous portion and a crystalline portion where any crystalline portion may exist as a separate phase. One aspect of this degree of compatibility is that the amorphous phase exhibits a single glass transition temperature as defined above.

Blends suitable for use in preparing articles in accordance with this invention comprise preferably from 5 to 95 weight percent of one of the molecularly compatible components preferably and from 95 to 5 weight percent of the second molecularly compatible component (either of the components can comprise more than one polymer as indicated above).

The polymer soluble in the solvent is referred to as the leachable component and the polymer removed by the process is referred to as the polymer leached out or extracted from the blend or article. The amount of leachable component utilized depends on the proposed use of the final shaped article. Generally either polymer may be leached out as desired by selecting the appropriate solvent. In a preferred embodiment, the non-leached polymer should be in a partly crystalline state. This has been found to be particularly advantageous in preparing microporous articles of this invention to reduce or control shrinkage of the pore size of the article.

The weight percent of the polymer component to be leached out is generally in the amount of from 10% to 90% and preferably from 30% to 70%, by weight based on the combined weight of the molecularly compatible polymers.

The blends can contain various additives in addition to the molecularly compatible polymer components in order to give any desired property to the non-leached polymer. For example, stabilizers, flame retardants, pigments, plasticizers, and the like can be present. Other polymers may also be added to give a desired property.

The blends can be prepared by any convenient technique. For example, the components can be mixed on a two-roll mill, in an internal mixer such as a Brabender mixer or Banbury mixer, or in a twin-screw extruder. They may also be prepared from a solvent, or cast from solution.

The shaped article can be formed by known techniques depending on the desired shape. Films of the blend can be formed by extrusion or casting, hollow fibers by melt spinning. Other articles may be injection molded, compression molded, pour molded, or blow molded.

The shaped article is treated with a solvent which should not substantially dissolve, extract or leach one of the compatible components, i.e. it must be a "non-solvent" for said polymer. The non-solvent may, however, cause the non-leached component to swell while in said solvent. Further, the non-solvent may remove low molecular weight fractions of the non-leached component. If it is desirable that a particular solvent be used but it is a solvent for both components, one of the components may be rendered non-soluble by crosslinking the polymer using known method such as irradiation or chemical curing for example. It is then necessary of course that the polymer involved be crosslinkable. Treatment with the solvent preferably takes place by immersing the shaped article in a bath containing the solvent. The shaped article is immersed in the bath for a period of time sufficient to remove the desired amount of the soluble polymer. Generally, the shaped article will be maintained in contact with the solvent for 1 min. to 8 hours or more, preferably from 10 min. to 4 hours. Alternatively the article may be suspended in the vapors of the boiling solvent.

The temperature at which the solvent treatment step is carried out depends on the solvent used and the polymer system utilized. In most instances the solvent will be maintained at temperatures from ambient temperature to the boiling point of the solvent.

Those skilled in the art will readily be able to select solvents which are non-solvents for at least one of the compatible polymer components. For example, methylene chloride at ambient temperature could be used to leach polymethylmethacrylate (PMMA) from a polyvinylidinefluoride ($PVF_2$)/polymethymethacrylate blend or methylene chloride at 40-50° C could be used to leach polyetherimide from polyetherimide/polyaryletherketone blends. Other examples are polyetherimide removed from poly(aryl ether ketone) by dimethyl formamide at 100° C and PMMA removed from $PVF_2$ with refluxing toluene.

In preparing microporous articles of this invention, the proportion of soluble polymer component utilized in the blend and the amount of that polymer which is leached out depends on the desired degree of porosity and other properties desired of the final article. Generally, it is desirable to leach out substantially all of the soluble polymer resulting in an article having the physical and mechanical properties of the non-soluble polymer. In certain circumstances, however, it may be advantageous to leach out a portion only of the soluble polymer. Presence of the soluble polymer can, for example, result in an article of greater flexibility,or greater wettability than exhibited by an article substantially free of the nonsoluble polymer. Generally, however the final porous shaped article should contain no more than 5 weight percent, based on the weight of the porous shaped article, of the soluble polymer.

It is not necessary to remove the solvent to use the microporous articles of the invention. For example, a membrane article of the invention leached with dimethyl formamide (DMF) may be placed directly in an aqueous solution for filtration purposes without removal of the solvent involved. Optionally however, the solvent is removed from the article. The removal can be accomplished by continuous removal e.g. distillation while the article is being treated by the solvent or subsequent to the completion of extraction by evaporation, vacuum, heat, filtration, freeze drying or any other technique known to one skilled in the art for removal of solvents.

Where the leaching solvent may weaken, cause to shrink or otherwise change the non-soluble polymer it may be desirable to "exchange" solvents in order to prevent such an occurrence. After treatment with the solvent, the treating solvent and dissolved polymer is removed from the shaped article by washing the shaped article with a second solvent.

The second solvent is miscible with the first and on washing with the second solvent the treating solvent and dissolved polymer is removed. The porous member can then be dried if desired to remove the second solvent. The selection of the second solvent depends on the first solvent used for leaching (and the nature of the polymer component being leached from the shaped article).

Further, the result of any shrinkage when the solvent is optionally removed is to reduce the porosity or pore size of the article. Since porosity of the article is the desired property sought in the preparation of the article, steps should be taken to eliminate or control shrinkage of the article. This can be achieved by clamping the article during the porosity forming steps, replacing the leaching solvent with one which is less plasticizing to the nonsoluble polymer (as described above), annealing the article before or after removal of the solvent, or freeze drying of the solvent. In general the shrinkage of the article advantageously may be from 10 to 30%.

Articles of the invention will have an average pore size preferably from 5 x $10^{-9}$ to 1 x $10^{-6}$m (0.005 microns to 1 micron) in diameter, more preferably from 1 x $10^{-8}$ to 1 x $10^{-7}$m (0.01 microns to 0.1 microns). However, the average pore size will be determined as desired, by for example, selection of the amount of polymer leached out, the contact time for the solvent, the solubility of the polymer in the solvent, the amount of polymer originally in the article, the above being readily ascertainable by one skilled in the art.

Membranes may be made from 1 x $10^{-6}$ to 5 x $10^{-4}$ m 1 micron to 500 microns) thick and preferably from 1 x $10^{-5}$ to about 1 x $10^{-4}$m 10 to 100 microns) thick. Films used in the manufacture of membranes of the invention refer to sheets or flat objects of optional width and length and a thickness of not greater than 2.5 x $10^{-4}$ m (250 microns). Membrane articles of the invention are desirable as they would not require mechanical support as, for example, an inversion cast microfilter would.

Mercury intrusion porisimetry is used to measure pore size as described by H.M. Roatare under the title "A Review of Mercury Porisimetry" in "Advance Experimental techniques in Powder Metallurgy" (Perspect Powder Met. (1970) pp 225-252 (Plenum Press)).

In preparation of recoverable shaped articles from molecularly compatible polymers in the manner described steps can be taken if desired to substantially control shrinkage of the article. This can be achieved by clamping the article during the porosity forming steps, replacing the leaching solvent with one which is less plasticising to the non-soluble polymer (as described above for "exchange of solvents"),

annealing the article before or after removal of the solvent, or removing of the solvent by freeze drying.

Example 1

PREPARATION OF FILM

The following materials were used to prepare microporous films.

Ultem D2000 (General Electric) - a high molecular weight poly(etherimide) which is amorphous and melt-processable.

Vitrex PEEK (ICI Americas) poly(carbonyl-p-phenylenep-oxy-phenylene-p-oxy-phenylene) - a high molecular weight poly(aryl ether ketone), which is semi-crystalline and melt processable.

The PEEK and Ultem resins were dried in air circulating ovens at 150 °C for a minimum of four hours before processing. Blends from 10 to 90 percent of each component by weight were then compounded on counter-rotating twinscrew extruder. The extrusion conditions were as follows.

| | | |
|---|---|---|
| Zone #1 | - | 330°C |
| Zone #2 | - | 340°C |
| Zone #3 | - | 350°C |
| Zone #4 | - | 350°C |
| Zone #5 | - | 360°C |
| Zone #6 | - | 370°C |
| Die | - | 380°C |
| Screw Speed | - | 75 rpm |

A one-hole die was used on the extruder and the emerging strand was passed through a water bath and then pellitized.

Differential scanning calorimetry was used to determine if molecular compatabilty had been achieved. Table #1 lists the Tg's recorded on the DSC for various composition. The DSC's were recorded on the second heating scan at 20 °C/minute.

| Composition (weight %) PEEK | / Ultem | Tg (°C) |
|---|---|---|
| 100 | 0 | 150 |
| 90 | 10 | 160 |
| 80 | 20 | 164 |
| 70 | 30 | 169 |
| 60 | 40 | 178 |
| 50 | 50 | 189 |
| 40 | 60 | 195 |
| 30 | 70 | 204 |
| 20 | 80 | 211 |
| 10 | 90 | 220 |
| 0 | 100 | 222 |

The molecular PEEK/Ultem blends were redried and then blown into film using a $1.9 \times 10^{-3}$m (3/4")

Brabender Extruder equipped with a circular blown film die. 0.102 m (Four inch) diameter tubes were formed with various wall thickness ranging from $1.27 \times 10^{-5}$ to $2.54 \times 10^{-4}$ m (.0005" to .010"). The films were transparent and had a slight yellow tint.

EXTRACTION

Sections were cut from the films and their weight recorded. Then they were placed into a resin kettle containing dimethyl formamide (DMF) which was fitted with a thermometer and condensor. The kettle was heated to 100°C for two hours. The resulting films were white and opaque indicating they were porous. The weight changes of the films are listed below.

| Initial Concentration % PEEK | / % Ultem | % Weight Loss |
|---|---|---|
| 70 | 30 | 27% |
| 60 | 40 | 36% |
| 50 | 50 | 48% |
| 40 | 60 | 58% |
| 30 | 70 | 67% |

PRESERVATION OF PORES BY SOLVENT EXTRACTION

After forming the pores by extraction in DMF, a solvent exchange procedure was followed to minimize shrinkage. The first step was to transfer the solvent filled PEEK film into a nonplasticizing solvent such as ethanol. The sample was allowed to soak for an hour or until the ethanol displaced the DMF in the membrane. The film was then placed into water at which time it floated until the water displaced the ethanol, at which time the sample sank to the bottom. The water filled membrane was then vacuum dried with very little shrinkage occurring. For $1.27 \times 10^{-4}$ m (0.005") 40% PEEK / 60% Ultem samples that have been extracted using the procedure described above typical volume shrinkage was 42 to 51 percent. After using the solvent exchange procedure described in this Example typical volume shrinkage was 8 to 12 percent.

Example 2

PREPARATION OF FILM

The following materials were used to form polyvinylidene fluoride/($PVF_2$) polymethylmethacrylate (PMMA) blends.

A high molecular weight PMMA supplied by Rohm and Haas which is melt processable.

Solef 1012 (Solvay Corp.) - a high molecular weight $PVF_2$ which is melt processable.

A 70% $PVF_2$/30% PMMA blend was mixed in a Brabender Plasticorder at 200°C. The molten polymer was removed from the mixing bowl and immediately compression molded into a flat slab at 200°C and then cooled in a cooling press. The resulting slab was $5.08 \times 10^{-4}$ m (0.020") thick and was transparent.

$2.54 \times 10^{-2}$ m (one inch) squares $PVF_2$/PMMA were cut from the slabs. The slabs were weighed and then extracted in both boiling under reflux methylene chloride at room temperature and toluene. Weight losses ranged from 26 to 28 percent. The samples were opaque and white indicating porosity.

PHYSICAL ANALYSIS

A: Mercury intrusion porosimetry (MIP) was done on blends of 55% PEEK / 45% Ultem that were

extracted by the methods detailed in Example 1. The MIP results confirmed a voided structure with an average pore size of 0.03 µm (microns). The largest pores detected were 0.07 µm (microns).

B: A Scanning Electron Microscope Study on the membranes formed in Examples 1 and 2 was undertaken. Extracted 60% Ultem / 40% PEEK membranes exhibited a very fine porous structure visible above 20,000X. Pore sizes were measured at less than 0.1 µm(microns). The extracted $PVF_2$ membrane from Example 2 had pores of 0.1 µm (microns) in diameter. The surface structure show pore of fairly even size and distribution.

## USE OF A MEMBRANE IN AN ELECTROCHEMICAL CELL

Diffusion of KOH through an extracted PEEK / Ultem membrane was examined. A cell was constructed with a resevoir of dilute potassium hydrooxide of pH 12 separated from a reservoir of dilute hydrochloric acid of pH 2 by an extracted 40% PEEK / 60% Ultem membrane. The pH change was monitored as a function of time on the acidic side using a pH meter. Equilibrium was reached in approximately four hours. This shows the permeability of the material.

## SHRINKAGE FORCE MEASUREMENT

$PVF_2$/PMMA blends were prepared as described in Example 1. Strips of the blend were measured and weighed, then placed into refluxing toluene or methylene chloride for four hours to remove the PMMA.

Once the solvent had cooled to ambient temperature the strips were removed and quickly clamped into the jaws of an Instron tensile testing machine. The jaw separation was held constant and the force the sample applied was measured as a function of time. As the solvent evaporated the force increased and then leveled off to a constant value when the evaporation was completed. The following Table lists these results.

| Solvent | B.T. | Average Weight Loss (%) | Average Stress Generated (PSI) |
|---|---|---|---|
| Toluene | 110.7 | 28.6 | 710 |
| Methylene Chloride | 40.1 | 31.6 | 852 |

## USE OF THE ARTICLE TO COUPLE OBJECTS

A cylinder with a diameter of 3.175 x $10^{-4}$m (0.125 inches) and length of 1.27 x $10^{-2}$m (0.50 inches) was machined from an injection molded bar of 60% PEEK / 40% Ultem. A 3.048 x $10^{-5}$m (0.0012 inch) hole was bored longitudinally through the cylinder. This specimen was extracted in PMF for four hours then allowed to cool in the solvent.

Two 2 x $10^{-4}$m (200 micron) plastic clad silica fiber optics (Maxlight Corp.) were cleared and then 6.35 x $10^{-3}$m (0.25 inches) of cladding was stripped from their ends. The extracted cylinder was then removed from the solvent and the fibers were inserted into the opposite ends until the cladding touched the cylinder. as the solvent evaporated the cylinder recovered onto the fibers, aligning them and applying force to hold them in place. A white light source was applied to one fiber end and could be detected visibly through the other end.

## Claims

1. A method of making a microporous article, which comprises:
   (a) forming a blend of two molecularly compatible polymers, the blend existing as a single amorphous phase;
   (b) forming the blend into an article of desired configuration; and
   (c) extracting at least some of one of the polymers by treatment with a solvent in which one of the polymers is soluble, while controlling shrinkage of the article.

2. A method as claimed in claim 1, in which the polymers are a polyvinylidene fluoride and a poly(methyl methacrylate).

3. A method as claimed in claim 1, in which the polymers are a polyvinylchloride and a polycaprolactone.

4. A method as claimed in claim 1, in which the polymers are a polystyrene and a poly(phenylene oxide).

5. A method as claimed in claim 1, in which the polymers are a polyetherimide and a poly(aryl ether ketone).

6. A method as claimed in claim 5, in which the poly(aryl ether ketone) has a repeat unit selected from the group consisting of:

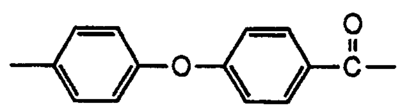

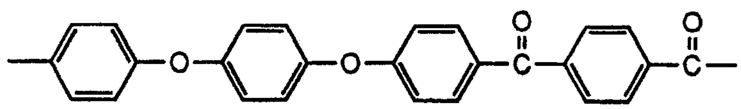

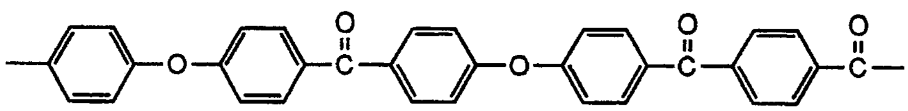

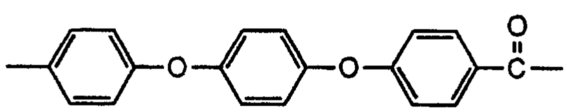

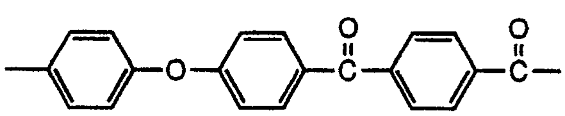

7. A method as claimed in claim 5, in which the poly(etherimide) has the formula:

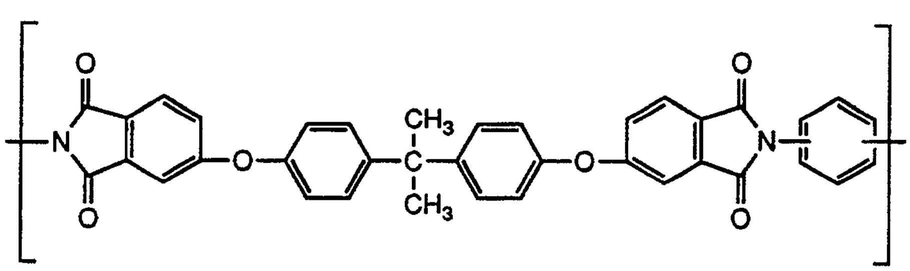

8. A method as claimed in any one of claims 1 to 7, in which the article is a membrane having a thickness

of from about $10^{-6}$ to about $5 \times 10^{-4}$m (about 1 micron to about 500 microns), preferably from $10^{-5}$ to about $10^{-4}$ m (about 10 to about 100 microns).

**9.** A method as claimed in any one of claims 1 to 8, in which the pore size of the membrane is from about $5 \times 10^{-9}$ to about $10^{-6}$ m (about 0.005 microns to about 1 micron), preferably from about $10^{-8}$ to about $10^{-7}$ m (about 0.01 to 0.1 microns).

**10.** A method as claimed in any one of claims 1 to 9, in which the polymer which is insoluble in the solvent is partially crystalline.

**11.** A method as claimed in any one of claims 1 to 10, in which the polymer which is insoluble in the solvent is crosslinked.

**12.** A method as claimed in any one of claims 1 to 11, in which control of shrinkage of the article is achieved by restraining the article physically.

**13.** A method as claimed in any one of claim 1 to 11, in which control of shrinkage of the article is achieved by displacement of the solvent in which the extracted component has been dissolved by another solvent.

## Revendications

**1.** Procédé de production d'un article microporeux qui consiste :
(a) a former un mélange de deux polymères compatibles du point de vue moléculaire, le mélange existant sous forme d'une seule phase amorphe ;
(b) à mettre le mélange sous forme d'un article ayant la configuration désirée ; et
(c) à extraire au moins une certaine quantité de l'un des polymères par traitement avec un solvant dans lequel l'un des polymères est soluble, tout en limitant la rétraction de l'article.

**2.** Procédé suivant la revendication 1, dans lequel les polymères sont un polyfluorure de vinylidène et un poly(méthacrylate de méthyle).

**3.** Procédé suivant la revendication 1, dans lequel les polymères sont un polychlorure de vinyle et une polycaprolactone.

**4.** Procédé suivant la revendication 1, dans lequel les polymères sont un polystyrène et un poly(oxyde de phénylène).

**5.** Procédé suivant la revendication 1, dans lequel les polymères sont un poly(étherimide) et une poly-(aryléthercétone).

**6.** Procédé suivant la revendication 5, dans lequel la poly(aryléthercétone) possède un motif répété choisi dans le groupe comprenant :

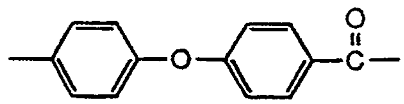

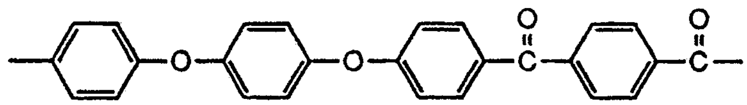

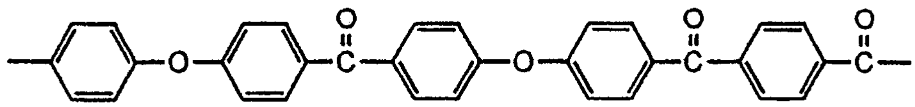

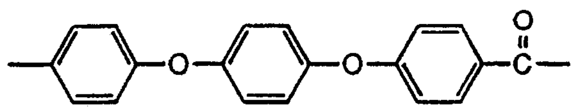

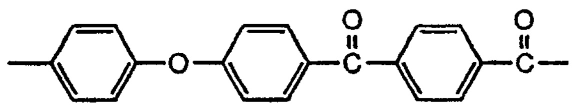

7. procédé suivant la revendication 5, dans leq

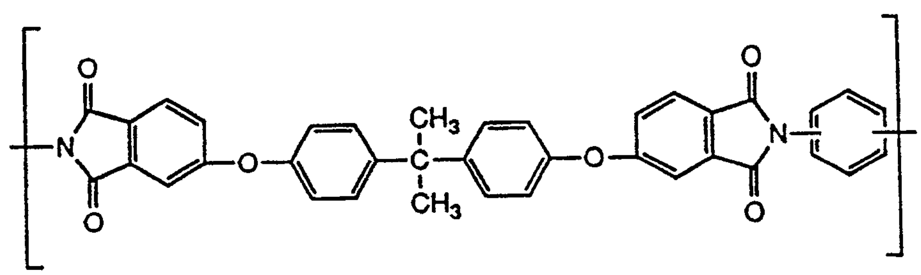

uel le poly(étherimide) répond à la formule :

8. Procédé suivant l'une quelconque des revendications 1 à 7, dans lequel l'article est une membrane ayant une épaisseur d'environ $10^{-6}$ à environ 5 x $10^{-4}$ m (environ 1 micromètre à environ 500 micromètres), de préférence de $10^{-5}$ à environ $10^{-4}$ m (environ 10 à environ 100 micromètres).

9. Procédé suivant l'une quelconque des revendications 1 à 8, dans lequel le diamètre des pores de la membrane est compris dans l'intervalle d'environ 5 x $10^{-9}$ à environ $10^{-6}$ m (environ 0,005 micromètre à environ 1 micromètre), de préférence d'environ $10^{-8}$ à environ $10^{-7}$ m (environ 0,01 à 0,1 micromètre).

10. Procédé suivant l'une quelconque des revendications 1 à 9, dans lequel le polymère qui est insoluble dans le solvant est partiellement cristallin.

11. Procédé suivant l'une quelconque des revendications 1 à 10, dans lequel le polymère qui est insoluble dans le solvant est réticulé.

12. Procédé suivant l'une quelconque des revendications 1 à 11, dans lequel la limitation de la rétraction de l'article est effectué en soumettant l'article à une contrainte physique.

13. Procédé suivant l'une quelconque des revendications 1 à 11, dans lequel l'ajustement de la rétraction de l'article est effectué par déplacement du solvant dans lequel le constituant extrait a été dissous par un autre solvant.

## Ansprüche

1. Verfahren zur Herstellung eines mikroporösen Gegenstands, umfassend:
   (a) Bilden eines Gemischs aus zwei molekular kompatiblen Polymeren, wobei das Gemisch als einzige amorphe Phase vorliegt;
   (b) Formen des Gemischs zu einem Gegenstand gewünschter Konfiguration; und
   (c) Extrahieren wenigstens eines Teils eines der Polymere durch Behandeln mit einem Lösungsmittel, in dem eines der Polymere löslich ist, unter gleichzeitiger Kontrolle der Schrumpfung des Gegenstands.

2. Verfahren nach Anspruch 1, wobei die Polymere ein Polyvinylidenfluorid und ein Poly(methylmethacrylat) sind.

3. Verfahren nach Anspruch 1, wobei die Polymere ein Polyvinylchlorid und ein Polycaprolacton sind.

4. Verfahren nach Anspruch 1, wobei die Polymere ein Polystyrol und ein Poly(phenylenoxid) sind.

5. Verfahren nach Anspruch 1, wobei die Polymere ein Polyetherimid und ein Poly(aryletherketon) sind.

6. Verfahren nach Anspruch 5, wobei das Poly(aryletherketon) eine Repetiereinheit hat, die ausgewählt ist aus der Gruppe, die umfaßt:

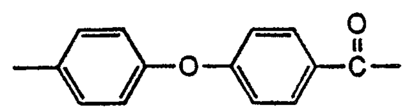

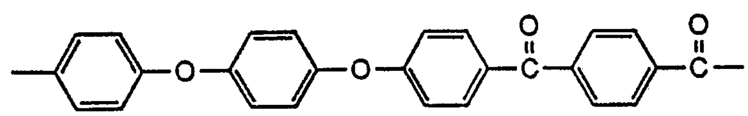

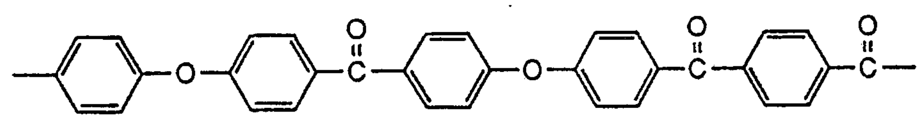

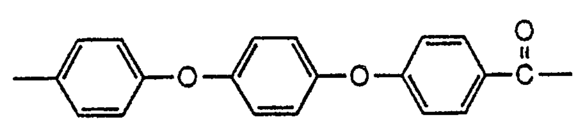

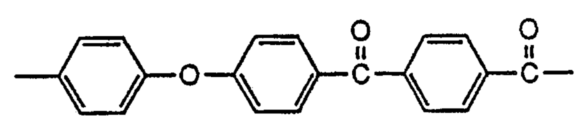

7. Verfahren nach Anspruch 5, wobei das Poly(etherimid) die folgende Formel hat:

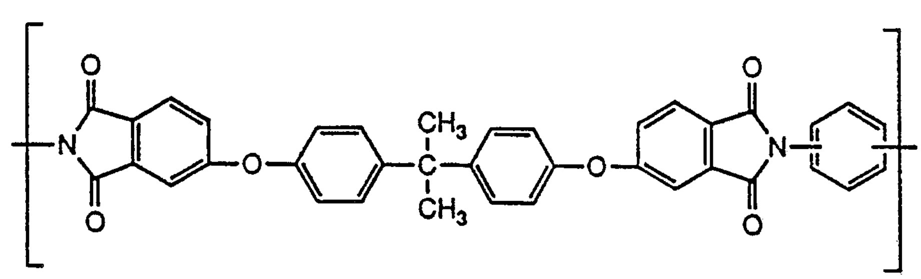

8. Verfahren nach einem der Ansprüche 1-7, wobei der Gegenstand eine Membran mit einer Dicke von ca. $10^{-6}$ bis ca. $5 \times 10^{-4}$ m (ca. 1 $\mu$m bis ca. 500 $\mu$m), bevorzugt von $10^{-5}$ bis ca. $10^{-4}$ m (ca. 10 bis ca. 100 $\mu$m) ist.

9. Verfahren nach einem der Ansprüche 1-8, wobei die Porengröße der Membran ca. $5 \times 10^{-9}$ bis ca. $10^{-6}$ m (ca. 0,005 $\mu$m bis ca. 1 $\mu$m), bevorzugt ca. $10^{-8}$ bis ca. $10^{-7}$ m (ca. 0,01-0,1 $\mu$m) beträgt.

10. Verfahren nach einem der Ansprüche 1-9, wobei das in dem Lösungsmittel unlösliche Polymer teilweise kristallin ist.

11. Verfahren nach einem der Ansprüche 1-10, wobei das in dem Lösungsmittel unlösliche Polymer vernetzt ist.

12. Verfahren nach einem der Ansprüche 1-11, wobei die Kontrolle der Schrumpfung des Gegenstands durch physisches Festlegen des Gegenstands erreicht wird.

13. Verfahren nach einem der Ansprüche 1-11, wobei die Kontrolle der Schrumpfung des Gegenstands durch Austauschen des Lösungsmittels, in dem der extrahierte Bestandteil gelöst ist, gegen ein anderes Lösungsmittel erreicht wird.